# EUROPÄISCHE PATENTSCHRIFT

(11) **EP 1 922 803 B1**
(45) Veröffentlichungstag und Bekanntmachung des Hinweises auf die Patenterteilung: **21.02.2018**
(21) Anmeldenummer: 05785050.5
(22) Anmeldetag: 09.09.2005
(51) Int. Cl.: H02M 7/81, H02M 1/00, H02M 7/483, H02M 7/797, H02J 3/36

(54) **VORRICHTUNG FÜR DIE ELEKTROENERGIEÜBERTRAGUNG**
DEVICE FOR ELECTRON ENERGY TRANSFER
DISPOSITIF DE TRANSMISSION D'ENERGIE ELECTRIQUE

(43) Veröffentlichungstag der Anmeldung: 21.05.2008
(60) Teilanmeldung: 17001325.4
(73) Patentinhaber: Siemens Aktiengesellschaft, 80333 München (DE)
(72) Erfinder: DAVIES, Mark, TAS 7018 Howrah (AU); HUANG, Hartmut, 91056 Erlangen (DE); RETZMANN, Dietmar, 91315 Höchstadt (DE); DORN, Jörg, 96155 Buttenheim (DE)
(86) Internationale Anmeldenummer: PCT/DE2005/001601
(87) Internationale Veröffentlichungsnummer: WO 2007/028349

(56) Entgegenhaltungen:
- EP-A- 1 087 512
- WO-A-2004/082115
- DE-A1- 10 103 031
- DE-A1- 10 323 220
- DE-A1- 19 850 886
- US-A- 5 198 746
- US-B1- 6 621 723
- KNUDSEN L ET AL: "DESCRIPTION AND PROSPECTIVE APPLICATIONS OF NEW MULTI-TERMINAL HVDC SYSTEM CONCEPTS" CIGRE CONF. INTERNATIONALE DES GRANDS RESEAUX ELECTRIQUES, 26. August 1990 (1990-08-26), Seiten 1-11, XP000770178

## Beschreibung

Die Erfindung betrifft eine Vorrichtung für eine Elektroenergieübertragung mit mindestens einem Stromrichter gemäß Anspruch 1, Vorteilhafle Weiterbildungen der Erfindung sind in den abhängigen Ansprüchen definiert.

Bekannte Vorrichtungen dieser Gattung weisen beispielsweise zwei gleichspannungsseitig verbundene Stromrichter auf, um elektrische Energie zwischen zwei elektrisch getrennten, asynchronen oder miteinander verbundenen, synchronen Wechselspannungsnetzen zu übertragen und diese Übertragung gezielt zu steuern. Eine solche Steuerung ist notwendig, da beispielsweise in den Wechselspannungsnetzen lokale Überlastungen oder ungleiche Lastverteilungen auftreten können. Die Überlastungen können dann durch die geregelte Energieübertragung ausgeglichen werden. Solche und eine Reihe weiterer Vorrichtungen sind als so genannte HGÜ-Anlagen und FACTS bekannt. In Stromrichtern dieser HGÜ-Anlagen und FACTS werden Leistungshalbleiter, wie beispielsweise Thyristoren, die in netzgeführter Technik wirken, oder abschaltbare Leistungshalbleiter, wie beispielsweise so genannte Insulated Gate Bipolar Transistoren (IGBT), eingesetzt, die bei selbstgeführten Topologien zum Einsatz kommen. Bei so genannten Voltage Sourced Convertern (VSC) mit abschaltbaren Leistungshalbleitern ist ein Energiezwischenspeicher, in der Regel ein Kondensator, notwendig. Nachteilig bei Anordnungen mit selbstgeführten Stromrichtern und einem Kondensator als Energiezwischenspeicher ist die Begrenzung der Übertragungsleistung durch die Größe des verwendeten Kondensators. Im Fehlerfall kann ein extrem hoher Kurzschlussstrom zur Zerstörung der Anlage führen. Mit einer derartigen Anordnung werden daher bislang in der Praxis nur Übertragungsspannungen bis zu etwa ±150 kV und Übertragungsleistungen von etwa 300 bis 500 Megawatt erreicht.

Aus der DE 101 03 031 A1 ist eine Stromrichteranordnung für Netzkupplungen bekannt, die anstelle eines Zwischenkreiskondensators als Energiespeicher verteilte Kondensatoren enthält, die in einzelnen Schaltelementen mit abschaltbaren Leistungshalbleitern und zugehörigen Freilaufdioden enthalten sind.

Die Schrift "Description and prospective applications of new multi-terminal HVDC system concepts" von Knudsen et al, CIGRE Conf. Internationale, 26. August 1990, Seiten 1-11, XP000770178 beschreibt ein Multi-Terminal HVDC Energieübertragungssystem, bei dem eine aktive Steuerung der zwischen den Terminals übertragenen elektrischen Leistung möglich ist.

Aus der europäischen Offenlegungsschrift EP 1 087 512 A2 ist ein ARCP Mehrpunktstromrichter (ARCP = Auxiliary Resonant Commutated Pole) bekannt. Dieser Mehrpunktstromrichter weist eine Reihenschaltung von mindestens vier Hauptschaltern pro Stromrichterphase auf, welche elektrisch parallel zwischen einer positiven und einer negativen Gleichspannungsschiene geschaltet sind. Parallel zu jedem einzelnen Hauptschalter ist eine Entlastungskapazität geschaltet.

Aus der internationalen Patentanmeldung WO 2004/082115 A1 ist ein Voltage Source Converter (VSC) bekannt, der für jede elektrische Phase mindestens zwei in Serie geschaltete Phasenschaltungen aufweist. Alle Phasenschaltungen des Konverters sind elektrisch in Reihe geschaltet und die Enden dieser Reihenschaltung sind mit einer Gleichspannung verbunden. Jede Phasenschaltung weist dabei zwei in Reihe geschaltete Stromventile auf, welche jeweils einen IGBT und eine antiparallel geschaltete Diode aufweisen.

Die deutsche Offenlegungsschrift DE 103 23 220 A1 offenbart eine Kurzschluss-Schaltung für einen Teilumrichter, der einen Zwischenkreiskondensator als Energiespeicher aufweist. Elektrisch parallel zu dem Zwischenkreiskondensator ist eine Diode geschaltet, die im Fehlerfall einen Kurzschlussstrom des Zwischenkreiskondensators übernehmen soll.

Aufgabe der vorliegenden Erfindung ist es, eine Vorrichtung der eingangs genannten Art auszubilden, mit der die Übertragungseigenschaften in oder zwischen Energieverteilungsnetzen verbessert sind.

Erfindungsgemäß wird die Aufgabe durch Mittel zum Regeln des Stromrichters gelöst, so dass der Nullphasenwinkel, die Amplitude und/oder die Augenblickswerte einer Wechselspannung eines mit der Vorrichtung verbindbaren Übertragungsnetzes und/oder die Gleichspannung und der Gleichstrom einer Gleichspannungsleitung, welche wenigstens einen der Stromrichter mit einer Gleichspannungsquelle verbindet, und/oder die Gleichspannung und der Gleichstrom von wenigstens drei miteinander verbundenen Stromrichtern steuerbar sind.

Erfindungsgemäß ist eine Vorrichtung mit einem Stromrichter bereitgestellt, der mehrere einzeln schaltbare Energiespeichermittel aufweist. Über die Mittel zum Regeln können die Eigenschaften eines solchen Stromrichters im Bereich der Energieübertragung und -verteilung und insbesondere bei der Blindleistungskompensation und der Gleichstromübertragung eingesetzt werden, wo die Eigenschaften eines solchen Stromrichters besonders vorteilhaft sind. So dient die erfindungsgemäße Vorrichtung beispielsweise zum Erhöhen der Stabilität des Übertragungsnetzes, an welches die erfindungsgemäße Vorrichtung anschließbar ist. Zusätzlich zur Verbesserung der Netzstabilität kann jedoch auch die Stromqualität der Energieübertragung optimiert werden, wobei der Begriff der Stromqualität hier die Versorgungssicherheit und die Spannungsqualität umfasst. Hierzu wird die von dem Stromrichter erzeugte Spannung an eine Übertragungsleitung des Übertragungsnetzes parallel aufgeschaltet oder seriell in diese eingekoppelt, so dass der Lastfluss in dem Übertragungsnetz wie gewünscht verändert ist. Zum phasengenauen parallelen Aufschalten oder seriellen Einkoppeln der Spannung sind in dem Übertragungsnetz zweckmäßigerweise Geräte zum Erfassen der Wechselspannung und des Wechselstromes vorgesehen, deren Messwerte einer Regelungseinheit der erfindungsgemäßen Vorrichtung zugeführt werden, welche anhand eines Vergleichs der gemessenen Werte mit vorgegebenen Sollwerten eine Regelung des Stromrichters ermöglicht. Die Mittel zum Regeln umfassen neben einer oder mehreren solcher Regelungseinheiten Messgeräte zum Erfassen von Messgrößen, auf der oder den Regelungseinheiten ablaufende Software, Kommunikationseinrichtungen und dergleichen. Steuerbare Größen der Regelung sind beispielsweise die Wechselspannung und/oder der Wechselstrom des Übertragungsnetzes. Das Übertragungsnetz weist eine oder mehrere Phasen auf. Unter Wechselspannung ist im Rahmen der beanspruchten Erfindung sowohl eine Grundschwingungsgröße als auch ein zeitlich beliebig veränderlicher Spannungsverlauf zu verstehen. So werden im Falle von im Wesentlichen sinusförmigen Wechselspannungen Nullphasenwinkel und Amplitude der Wechselspannung des Übertragungsnetzes bevorzugt geregelt. Zur Regelung anderer zeitlicher Verläufe der Wechselspannung dienen bevorzugt die Augenblickswerte der Wechselspannung, die auch als Momentanwerte bezeichnet werden können. Unter dem Begriff Nullphasenwinkel ist die Phasendifferenz zwischen der Wechselspannung und einer Bezugsgröße zu verstehen, die von den jeweils an die erfindungsgemäße Vorrichtung gestellten Anforderungen abhängig ist. Nur beispielsweise sei daher hier der Wechselstrom des Übertragungsnetzes am Anschlusspunkt als Bezugsgröße genannt.

Der Stromrichter kann über eine Gleichspannungsleitung auch mit einer Gleichspannungsquelle verbunden sein. Bei der Gleichspannungsquelle handelt es sich beispielsweise um einen weiteren Stromrichter. Beide Stromrichter arbeiten dann als gleichspannungsseitig miteinander verbundene Umrichter einer Gleichstromübertragungsanlage, wobei die Regelgrößen die Gleichspannung und/oder der Gleichstrom der Gleichstromleitung und/oder die Wechselspannung des Übertragungsnetzes sind. Die Gleichspannung und der Gleichstrom werden beispielsweise an jedem Stromrichter erfasst und einer dem Stromrichter jeweils zugeordneten Regelungseinheit zugeführt. Durch die Regelung lässt sich die zu übertragende Wirkleistung und/oder Blindleistung und/oder deren jeweiliger Anteil bestimmen. Die Sollparameter werden im Falle von entfernt voneinander aufgestellten Stromrichtern durch eine zweckmäßige Datenfernübertragung zwischen den Stromrichtern übertragen. Vorteilhafterweise sind die Stromrichter einer solchen Gleichstromfernübertragungsanlage mehrer Kilometer entfernt voneinander aufgestellt.

Im Rahmen der Erfindung ist ferner eine Kurzkupplung zur Energieübertragung und -verteilung beansprucht, die wenigstens drei Stromrichter aufweist. Eine solche Vorrichtung wird auch als Multiterminal-Kurzkupplung bezeichnet. Die Stromrichter sind in diesem Falle beispielsweise direkt, also ohne eine Gleichstromleitung, miteinander verbunden, wobei Gleichstrom und Gleichspannung am jeweiligen Stromrichter oder an nur einer Messstelle erfasst werden.

Der Aufbau und die Funktion der Schaltelemente sind in der DE 101 03 031 A1, die hiermit als ganzes Teil der vorliegenden Offenbarung wird, beschrieben. Vorteilhaft bei einer solchen Vorrichtung ist, dass sich die gespeicherte Energie auf eine Vielzahl von jeweils kleineren Energiespeichermitteln verteilt, so dass die Spannungs- bzw. Leistungsbegrenzung bei Anordnung eines einzelnen Energiespeichermittels, beispielsweise eines Kondensators, überwunden wird. Ferner wird durch die verteilten Energiespeichermittel eine gegenüber Vorrichtungen mit nur einem gemeinsamen Energiespeicher eine feinere Abstufung der vom Stromrichter gelieferten Spannung ermöglicht, so dass der Aufwand zur Glättung und Filterung am Anschlusspunkt der Vorrichtung reduziert ist. So ist beispielsweise die Ankopplung des Stromrichters an das Übertragungsnetz wesentlich vereinfacht. Aufwendige magnetische Kopplungsmaßnahmen, beispielsweise durch Reihenschaltung von Transformatorwicklungen, entfallen im Rahmen der Erfindung. Des Weiteren ist erfindungsgemäß eine erhöhte Betriebssicherheit gewährleistet, da beim Ausfall eines einzelnen Schaltelementes, beispielsweise durch einen Kurzschluss, die anderen Schaltelemente nach wie vor funktionsfähig bleiben. Die einzelnen Schaltelemente eines Phasenelementes wirken wie steuerbare Spannungsquellen und weisen drei mögliche Zustände auf. In einem ersten Zustand ist die Klemmenspannung des Schaltelements gleich der Kondensatorspannung. In einem zweiten Zustand ist die Klemmenspannung des Schaltelements abgesehen von einer Durchlassspannung des abschaltbaren Leistungshalbleiters oder der Freilaufdiode nahezu gleich Null, wobei ein dritter Zustand für den Störungsfall vorgesehen ist.

Die Vorrichtung ist erfindungsgemäß modular aufgebaut. Der modulare Aufbau erfolgt durch Phasenelemente, die wiederum in Schaltelemente untergliedert sind. Die Schaltelemente sind entweder identisch und insbesondere mit identischen Energiespeichermitteln aufgebaut, die somit über die gleiche Speicherkapazität verfügen. Abweichend hiervon kommen jedoch auch Kombinationen mit unterschiedlicher Auslegung der Kapazität im Rahmen der Erfindung in Betracht.

Bei einer zweckmäßigen Weiterentwicklung der Erfindung sind die Schaltelemente eines Phasenelementes in Reihe geschaltet, wobei die Schaltelemente in geradzahliger Anzahl vorgesehen sind, und ein Last- oder Netzanschluss an der Reihenschaltung der Schaltelemente mittig angeordnet ist. Durch die Reihenschaltung mehrerer Schaltelemente und eine entsprechende Ansteuerung der einzelnen Schaltelemente ist eine Spannungsaussteuerung mit einer noch feineren Abstufung möglich. Bei einem mittigen Last- oder Netzanschluss sind die Schaltelemente einer Seite der Reihenschaltung beispielsweise in einem weiter oben beschriebenen ersten Zustand und die Schaltelemente der anderen Seite im ebenfalls weiter oben beschriebenen zweiten Zustand oder umgekehrt. Mit diesen Ansteuerungen werden am Phasenelement maximale Spannungswerte erreicht. Werden eines oder mehrere Schaltelemente auf den jeweiligen Seiten in den zweiten Zustand gesteuert, ergibt sich die Abstufung der Spannung mit einer Stufenhöhe der Spannung der einzelnen Schaltelemente.

Im Rahmen der Erfindung sind jedoch auch Phasenelemente mit ungerader Anzahl an Schaltelementen und/oder Phasenelementen mit einem nicht-mittigen Last- oder Netzanschluss möglich. Die einzelnen Schaltelemente sind beispielsweise für gleiche oder ungleiche Spannungen ausgelegt und zweckmäßigerweise binär oder anderweitig, unterschiedlich gestuft, wodurch eine feinere Abstimmung bei gleicher Anzahl der Schaltelemente ermöglicht ist als im Falle einer Auslegung für gleiche Spannungen.

Das Phasenelement umfasst eine Anordnung mit zwei Parallelzweigen mit jeweils einer geraden Anzahl von Schaltelementen in Reihenschaltung. Durch die Parallelschaltung von zwei Zweigen mit jeweils einer Reihenschaltung von Schaltelementen ist die Abstufungsfeinheit der vom Stromrichter generierbaren Spannung noch weiter erhöht.

Wenigstens zwei Parallelzweige sind mittels einer Transformatorwicklung miteinander verbunden. Hiervon abweichend können wenigstens zwei Parallelzweige galvanisch über eine Parallelzweigverbindung miteinander verbunden sein. Die galvanische Verbindung mittels einer Parallelzweigverbindung ermöglicht eine kostengünstige Bauweise eines Transformators, der zum Anschluss der erfindungsgemäßen Vorrichtung an ein Übertragungsnetz und/oder an eine Gleichspannungsleitung dient.

In zweckmäßiger Fortbildung sind mehrere Phasenelemente eines Stromrichters parallel miteinander verbunden. Dabei bilden die Phasenelemente eine Brückenschaltung aus. Der Stromrichter wirkt wie ein als solcher bekannter so genannter Voltage Sourced Converter (VSC) und ist somit in vorteilhafter Weise an das Übertragungsnetz zum Einkoppeln einer steuerbaren mehrphasigen Wechselspannung zur Blind- und/oder Wirkleistung anschließbar. Dabei generiert der Stromrichter eine mehrphasige Wechselspannung. Durch die Regelungsmittel kann wahlweise der Nullphasenwinkel und/oder die Amplitude der in das Übertragungsnetz einzukoppelnden Wechselspannung und zwar unabhängig voneinander beeinflusst werden. Ein solcher Stromrichter kann daher beispielsweise auch als aktives Filterelement anstelle von oder kombiniert mit passiven Filtern, wie beispielsweise RC-Gliedern, zur aktiven Filterung von Spannungsverzerrungen im Frequenzbereich unter und/oder oberhalb der Netzfrequenz (sub-, supersub-Harmonische) und/oder zur Kompensation von Spannungsunsymmetrien verwendet werden. Hierbei wird eine solche Spannung vom Stromrichter eingekoppelt, dass die Spannungsabweichungen von der Sinusform beispielsweise durch negative Interferenz ausgelöscht werden.

Ferner kann ein solcher Voltage Sourced Converter auch bei der Gleichstromübertragung als Umrichter verwendet werden. Der Stromrichter oder besser Umrichter umfasst dann beispielsweise drei parallel miteinander verbundene Phasenelemente in bekannter Brückenschaltung. Auch eine Anordnung mit zwei parallel geschalteten Phasenelementen bietet eine einfache Möglichkeit zur Ausbildung eines Umrichters zur Gleichstromübertragung zum Anschluss an ein Übertragungsnetz mit nur einer einzigen Phase, beispielsweise über einen Koppeltransformator, oder an ein Übertragungsnetz mit mehreren Phasen. Der Begriff Gleichstromübertragung umfasst im Rahmen der vorliegenden Erfindung sowohl die Hochspannungsgleichstromübertragung (HGÜ) als auch Mittelspannungsgleichstromübertragung (MGÜ) und Niederspannungsgleichstromübertragung (NGÜ).

In einer anderen Ausführungsform sind mehrere Phasenelemente in Reihe miteinander verbunden. Vorteilhafterweise werden Phasenelemente mit zwei Parallelzweigen mit jeweils mehreren Schaltelementen miteinander in Reihe verbunden. Eine solche Anordnung wirkt ebenfalls als Voltage Sourced Converter und kann beispielsweise als Umrichter in einer Gleichstromübertragungsanlage wirken. Dabei ermöglicht die Reihenschaltung bei einer vorgegebenen Leistung die Übertragung mit einer höheren Gleichspannung, also mit kleinerem Strom und daher geringeren Verlusten.

In vorteilhafter Weiterbildung sind parallel zu den Phasenelementen Energiespeichermittel angeordnet. Solche zusätzlichen Energiespeichermittel werden zum Zweck einer weiteren Glättung und Stabilisierung eingesetzt.

In einer weiteren Ausgestaltung weist jedes Phasenelement mindestens eine Impedanz auf oder ist über mindestens eine Impedanz mit einem anderen Phasenelement verbunden. Solche Impedanzen, im einfachsten Fall ausgebildet als Spulen, wirken in vorteilhafter Weise zur Begrenzung eines Kreisstromes, der zwischen den einzelnen Phasenelementen beispielsweise aufgrund von Spannungsschwankungen oder Spannungsunsymmetrien auftreten kann. Außerdem können die Impedanzen so ausgelegt werden, dass in Fehlerfällen die Stromanstiegssteilheit und/oder die Stromamplitude begrenzt wird. Die Impedanz ist dabei beispielsweise entweder mit dem Phasenelement oder mit einzelnen Schaltelementen eines Phasenelementes in Reihe geschaltet oder in die Schaltelemente integriert, z.B. in vorteilhafter Modulbauweise.

In einer bevorzugten Ausführungsform ist mindestens ein Stromrichter parallel zum Übertragungsnetz anschließbar. Eine solche Anordnung dient zur so genannten Parallelkompensation für die Blind- und/oder Wirkleistungssteuerung und entfaltet beispielsweise dynamische Regelfunktionen zur Dämpfung von unerwünschten Leistungspendelungen und/oder subsynchronen Resonanzen und/oder sub- bzw. supersub-Harmonischen. Die vorteilhafte Weiterentwicklung dient beispielsweise auch zur Spannungssymmetrierung.

Besonders vorteilhaft gegenüber bekannten Parallelkompensationsvorrichtungen ist bei der erfindungsgemäß weiterentwickelten Vorrichtung, dass durch die bereits oben beschriebene Reihenschaltung der Schaltelemente eine fein abstufbare Wechselspannung in die Übertragungsleitung eingekoppelt werden kann, wobei die Energie zur Erzeugung der Wechselspannung in den verteilten Energiespeichermitteln der einzelnen Schaltelemente gespeichert ist, im Gegensatz zu bekannten Vorrichtungen, bei denen ein einzelner Kondensator als Energiespeicher dient und der aufgrund seiner Größe als begrenzendes Element für die Übertragungsspannung und Leistung der Vorrichtung wirkt. Mit der erfindungsgemäßen Vorrichtung mit Energiespeichermitteln in jedem Schaltelement ist die einzukoppelnde Spannung daher feiner einstellbar.

In einer weiteren Ausgestaltung ist mindestens ein Stromrichter in Reihe zum Übertragungsnetz anschließbar. Ein solcher Anschluss dient ebenfalls zur Blind- und/oder Wirkleistungssteuerung des Übertragungsnetzes, einschließlich der bereits beschriebenen dynamischen Regelfunktionen, durch aktive Aufschaltung und/oder Einkopplung einer dynamisch in Betrag und/oder Phase veränderlichen Spannung. Vorteilhafterweise umfasst die erfindungsgemäße Vorrichtung mehrere Stromrichter, von denen einer parallel und einer in Reihe zum Übertragungsnetz geschaltet ist. Die Blind- und/oder Wirkleistungssteuerung des Übertragungsnetzes oder auch die vorstehend beschriebenen dynamischen Regelfunktionen werden durch eine aktive Einkopplung von zwei dynamisch in Betrag und/oder Phase veränderlichen Spannungen verbessert. Das Übertragungsnetz ist beispielsweise eine einphasige oder eine mehrphasige Übertragungsleitung.

In einer abweichenden Ausführungsform ist die Gleichspannungsquelle ein zweiter Stromrichter. Der zweite Stromrichter kann in diesem Fall als Gleichrichter wirken, wobei der Gleichstrom über die Gleichspannungsleitung zum ersten Stromrichter geführt wird. Der erste Stromrichter oder besser Umrichter dient dann zur Umwandlung einer Gleichspannung in eine Wechselspannung. Die Wirkungsweise der Stromrichter als Gleichrichter oder Wechselrichter ist jedoch beliebig wählbar.

Die Gleichspannungsleitung ist zumindest zum Teil eine gasisolierte Übertragungsleitung, ein Kabel und/oder eine Freileitung. Selbstverständlich sind im Rahmen der Erfindung auch Kombinationen dieser Leitungen möglich. Der besondere Vorteil von gasisolierten Übertragungsleitung, GIL, gegenüber einem Kabel, auch in Kombination mit einer Freileitung, ist die bessere Beherrschbarkeit dynamischer Regel- und Schutzfunktionen auf Grund der geringeren Ladekapazität der gasisolierten Leitung. Eine auf diese Weise weiterentwickelte erfindungsgemäße Vorrichtung dient beispielsweise zur Gleichstromfernübertragung, um aus einphasigen oder mehrphasigen Wechselspannungen mittels eines ersten Gleichrichters eine Gleichspannung zu erzeugen. Die Gleichspannung wird an den zweiten Stromrichter oder Umrichter übertragen. Die Gleichspannungsübertragung erfolgt grundsätzlich mit einer beliebig ausgestalteten Gleichspannungsleitung.

Vorteilhaft bei der Verwendung eines erfindungsgemäßen Stromrichters mit drei parallelen miteinander verbundenen Phasenelementen ist, dass gleichspannungsseitig kein Energiespeichermittel mit der Gleichspannungsleitung zu verbinden ist, da die einzelnen Schaltelemente der Phasenelemente selbst über Energiespeichermittel verfügen, die sowohl als Energiespeicher als auch zur Spannungsglättung auf der Gleichspannungsseite dienen. Die Verwendung von drei parallel miteinander verbundenen Phasenelementen im zweiten Stromrichter ermöglicht durch die Schaltelemente mit Energiespeichermitteln die Erzeugung einer feiner abstufbaren mehrphasigen Wechselspannung beispielsweise zur Einkopplung in ein angeschlossenes Wechselspannungsnetz.

Selbstverständlich sind im Rahmen der Erfindung auch Gleichspannungsübertragungsanlagen mit mehr als zwei Stromrichtern, also so genannte Multiterminals, realisierbar. Im Falle von Multiterminals, also Gleichstromübertragungsanlagen mit wenigstens drei Stromrichtern, ist die Gleichspannungsleitung im Rahmen der Erfindung optional. Mit andern Worten umfasst die Erfindung in einer Variante mit wenigstens drei Stromrichtern, die gleichspannungsseitig miteinander verknüpft sind, sowohl eine Gleichstromfernübertragungsanlage als auch eine Kurzkupplung.

In einer zweckmäßigen Ausgestaltung umfasst der erste oder der zweite Stromrichter netzgeführte Leistungshalbleiter. Die Ausführung der Vorrichtung mit einem Stromrichter, der z.B. eine Brückenschaltung aus netzgeführten Leistungshalbleitern, beispielsweise Thyristoren oder im einfachsten Fall auch Dioden anstelle der abschaltbaren Leistungshalbleiter, aufweist, ermöglicht eine Reduzierung der Anlagenkosten.

In einer zweckmäßigen Weiterentwicklung ist die Gleichspannungsleitung ein- oder zweipolig. Zweipolige Gleichspannungsleitungen ermöglichen die Übertragung höherer Leistungen. Einpolige Gleichspannungsleitungen, die den Gleichstrom über die Erde oder bei Seekabelverbindungen über das Wasser zurückleiten, führen zu kostengünstigen Vorrichtungen. Ein- oder zweiphasige Übertragungsnetze auf der Wechselstromseite der erfindungsgemäßen Gleichstromfernübertragungsanlage ermöglichen den Anschluss an Sondernetze, z.B. zur Bahnstromversorgung. Selbstverständlich sind im Rahmen der Erfindung auch mehrpolige Gleichspannungsleitungen möglich.

In einer weiteren Ausführungsform dieser Weiterentwicklung ist die Gleichspannungsleitung durch eine Impedanz ausgebildet, im einfachsten Fall eine Spule. Mit einer Spule als Gleichspannungsleitung kann beispielsweise eine als solche bekannte so genannte Kurzkupplung ausgebildet sein, wobei die Spule Funktionen wie Glättung, Strombegrenzung und/oder Begrenzung von Anstiegssteilheiten übernimmt.

In einer zweckmäßigen Ausgestaltung ist den Schaltelementen jeweils eine weitere Diode parallel geschaltet. Eine solche weitere Diode, beispielsweise eine an sich bekannte druckkontaktierte Diode wie eine Scheibenzellendiode oder eine in einem druckkontaktierten Elektronikmodul integrierte Diode, kann in einem Fehlerfall eines oder mehrerer Schaltelemente bei entsprechender Ansteuerung durch die Regelung eine Überbrückung eines defekten Schaltelementes ausbilden, wodurch ein Weiterbetrieb des Stromrichters ermöglicht wird. Dabei wird durch geeignete Ansteuerung der noch intakten Schaltelemente am defekten Schaltelement gezielt eine kurzzeitige Überspannung aufgebaut, so dass die parallel geschaltete Diode durchlegiert und das defekte Schaltelement dauerhaft bis zum Austausch beim nächsten Wartungszyklus überbrückt bleibt. Des Weiteren kann auch die im Leistungshalbleiter integrierte Freilaufdiode eine derartige Überbrückungsfunktion des Schaltelements im Fehlerfall aufweisen.

Energiespeichermittel umfassen Energiespeicher wie beispielsweise Batterien, Schwungrad oder Super-Caps und Kondensatoren. Die Energiespeicher weisen eine im Vergleich zu Kondensatoren wesentlich höhere Energiedichte auf. Das hat den Vorteil, dass die Blind- und/oder Wirkleistungssteuerung einschließlich der bereits beschriebenen dynamischen Regelfunktionen auch bei einem längeren Spannungsab- oder Ausfall im Übertragungsnetz oder in der Gleichspannungsleitung verfügbar bleibt. Die Verwendung von Energiespeichermitteln mit einer hohen Energiedichte hat eine verbesserte Verfügbarkeit des Systems im Gefolge.

Vorteilhafterweise sind die Energiespeichermittel zumindest teilweise Kondensatoren. Kondensatoren sind im Vergleich mit den derzeit bekannten Energiespeichern kostengünstig.

In einer bevorzugten Ausführungsform erfolgt die Verbindung der Stromrichter mit der Gleichspannungsleitung mittels eines Energiespeichers. Bei Verwendung von Energiespeichern mit einer hohen Energiedichte ergibt eine solche Verbindung eine verbesserte Verfügbarkeit des Systems. Als Energiespeicher kommen auch bei dieser erfindungsgemäßen Weiterbildung beispielsweise die oben genannten Energiespeicher mit Ausnahme der Supercaps in Betracht. Die Anbindung der Energiespeicher an die Gleichspannungsleitung erfolg seriell oder parallel.

Vorteilhafterweise bildet die Vorrichtung eine Gleichstromübertragungsanlage und/oder ein so genanntes FACTS (Flexible AC Transmission System) aus und liefert dabei eine fein abgestufte Ausgangsspannung. Ein weiterer Vorteil ist die Übertragung einer Blind- und/oder Wirkleistung ohne aufwendige magnetische Kopplung. Dabei ist die erfindungsgemäße Vorrichtung vorteilhafterweise in modularer Bauweise ausgestaltet. Besonders bevorzugt wird die erfindungsgemäße Vorrichtung für die Gleichstromübertragung, und/oder zur Ausgestaltung eines so genannten Static Synchronous Compensators (STATCOM), eines Static Synchronous Series Compensators (S3C) oder eines Unified Power Flow Controllers (UPFC) verwendet.

Die Erfindung betrifft ferner ein System mit einer Vorrichtung für die Elektroenergieübertragung der oben genannten Art. Auch hier ist das Übertragungsnetz einphasig oder weist mehrere Phasen auf. In der Regel ist das Übertragungsnetz eine dreiphasige Drehstromleitung, an welche die erfindungsgemäße Vorrichtung angeschlossen ist.

Die Erfindung wird im Folgenden anhand von Ausführungsbeispielen mit Bezug auf Figuren der Zeichnung beschrieben, wobei gleiche Bezugszeichen auf Bauteile mit gleicher Wirkung verweisen. Es zeigen:
- Figur 1: eine schematische Darstellung eines Ausführungsbeispiels der erfindungsgemäßen Vorrichtung;
- Figur 2: eine Schaltungsanordnung eines Schaltelementes der Vorrichtung gemäß Figur 1;
- Figur 3: ein weiteres Ausführungsbeispiel eines Schaltelementes der Figur 1;
- Figur 4: eine beispielhafte schematische Darstellung eines Stromrichters mit einer Reihenschaltung von Phasenelementen der erfindungsgemäßen Vorrichtung;
- Figur 5: eine beispielhafte schematische Darstellung eines Stromrichters mit einer Parallelschaltung von Phasenelementen der erfindungsgemäßen Vorrichtung;
- Figur 6: ein weiteres Ausführungsbeispiel der erfindungsgemäßen Vorrichtung.

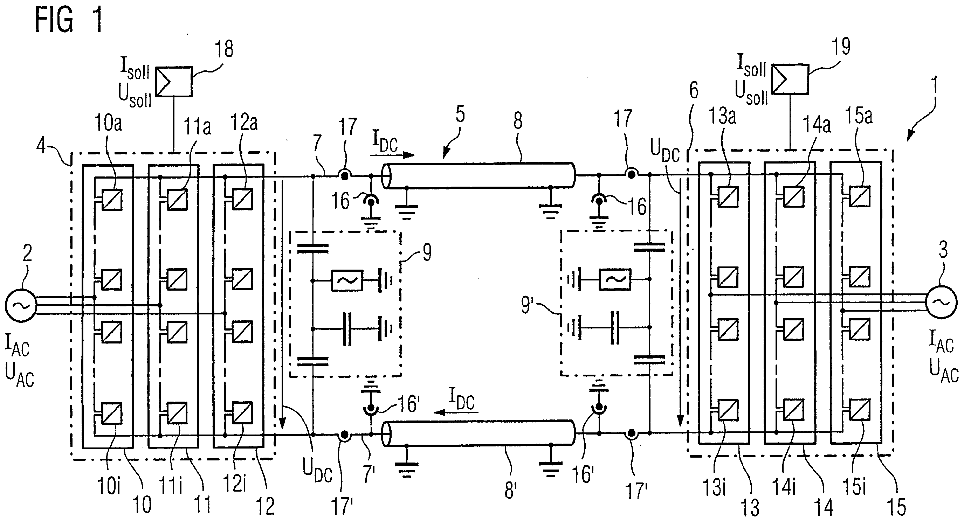

In Figur 1 ist als Vorrichtung für die Elektroenergieübertragung eine Hochspannungsgleichstromfernübertragungs-(HGÜ-) Anlage 1 zur bi-direktionalen Leistungsübertragung von einem Übertragungsnetz oder Wechselspannungsnetz 2 in ein anderes Wechselspannungsnetz 3 dargestellt. Die Wechselspannungsnetze 2 bzw. 3 sind dabei über nicht dargestellte Transformatoren und/oder Spulen oder galvanisch mit der HGÜ-Anlage verbunden. Die HGÜ-Anlage 1 umfasst einen ersten Umrichter 4 als Stromrichter zur Umwandlung der Wechselspannung in eine Gleichspannung, ein Übertragungskabel 5 als Gleichspannungsleitung sowie einen zweiten Umrichter 6 als Stromrichter zur Umwandlung der Gleichspannung in eine Wechselspannung. Das bipolare Übertragungskabel 5.umfasst zwei Innenleiter 7, 7' sowie die Leiter abschirmende Mantelleitungen 8, 8', welche jeweils an ihren Enden geerdet oder durch andere geeignete Maßnahmen, wie beispielsweise Ableiter, geschützt sind. Der erste Umrichter 4 weist drei Phasenelemente 10, 11, 12 auf, von denen jedes über eine Vielzahl von in Reihe angeordneten Schaltelementen 10a ... 10i, 11a ... 11i und 12a ... 12i verfügt. Dabei ist jedes Phasenelement aus Symmetriegründen in der Mitte der Reihenschaltung der Schaltelemente mit jeweils einer Phase der Wechselspannung des Wechselspannungsnetzes 2 verbunden. Der zweite Umrichter 6 umfasst ebenfalls drei Phasenelemente 13, 14, 15 mit jeweils einer geradzahligen Anzahl von in Reihe geschalteten Schaltelementen 13a ... 13i, 14a ... 14i, 15a ... 15i, die jeweils in der Mitte der Reihenschaltung einen Anschluss für eine Phase eines Wechselspannungsnetzes aufweisen. Die Vorrichtung umfasst ferner an den jeweiligen Enden des Übertragungskabels 5 weitere mit 9 bzw. 9' bezeichnete Schaltungsanordnungen aus Kondensatoren und/oder Spulen und/oder Widerständen und/oder Ableitern, die zur zusätzlichen Glättung der Gleichspannung bzw. Stabilisierung der Übertragung angeordnet sind.

Spannungswandler 16,16' sowie Stromwandler 17, 17' sind zur Messung von Spannung beziehungsweise Strom sowohl am Gleichspannungszwischenkreis 5 als auch an den jeweiligen Wechselspannungsnetzen 2, 3 vorgesehen, wobei die wechselstromseitigen Spannungswandler und Stromwandler aus Gründen der Übersichtlichkeit figürlich nicht dargestellt sind. Die Ausgangssignale der Spannungswandler 16, 16' und der Stromwandler 17, 17' entsprechen den jeweils zu überwachenden Messgrößen der Hochspannungsbauteile. Die erfassten Größen werden schließlich als Messwerte an Regelungseinheiten 18, 19 der Vorrichtung übertragen. In den Regelungseinheiten 18, 19 werden die Signale unter Gewinnung von jeweils zugeordneten Abtastwerten abgetastet und die Abtastwerte unter Gewinnung digitaler Messwerte digitalisiert. Die gemessenen digitalisierten Messströme I_{DC} und/oder I_{AC} und die gemessenen digitalisierten Messspannungen U_{DC} und/oder U_{AC} werden jeweils mit vorgegebenen Sollwerten I_{Soll} bzw. U_{Soll} verglichen. Mittel zum Regeln der Vorrichtung steuern auf der Grundlage von Steuerungs- und/oder Regelungsverfahren die Umrichter 4 und 6.

Zwischen die Verbindungen der Phasenelemente 10, 11, 12 bzw. 13, 14, 15, oder jeweils am mittigen Anschluss wenigstens eines der Schaltelemente 10a ... 10i, 11a ... 11i und 12a ... 12i bzw. 13a ... 13i, 14a ... 14i, 15a ... 15i können weitere figürlich nicht dargestellte Spulen angeordnet sein. Die Spulen begrenzen einen möglichen Kreisstrom zwischen den Phasenelementen.

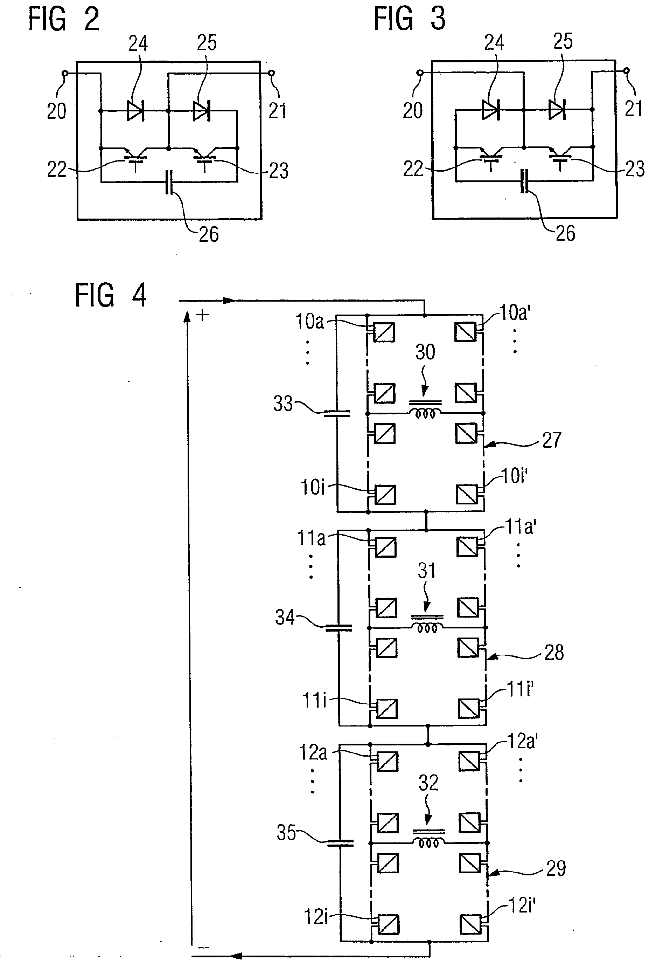

Die Figuren 2 und 3 zeigen gleichwertige Schaltungsanordnungen, die aus der DE 101 03 031 A1 bekannt sind und in der Vorrichtung gemäß Fig. 1 als Schaltelemente 10a ... 10i, 11a ... 11i, 12a ... 12i, 13a ... 13i, 14a ... 14i, 15a ... 15i eingesetzt sind. Die Schaltelemente umfassen zwei Anschlussklemmen 20, 21, zwei Leistungshalbleiter 22, 23, zwei Dioden 24, 25 sowie einen Kondensator 26 als Energiespeichermittel. Die Leistungshalbleiter 22 und 23 sind im gezeigten Beispiel abschaltbare elektronische Schalter und hier IGBTs. Als Leistungshalbleiter können jedoch auch IGCTs, MOS-Schalteffekttransistoren oder dergleichen verwendet werden. Die Funktion der Schaltungsanordnung sowie der Reihenschaltung mehrerer solcher Schaltelemente ist in der DE 101 03 031 A1 beschrieben, die durch diese Bezugnahme Gegenstand der vorliegenden Offenbarung ist. Die einzelnen Schaltelemente können für gleiche oder unterschiedliche Spannungsbereiche ausgelegt sein, beispielsweise auch binär oder anderweitig unterschiedlich abstufbar. An die Anschlussklemmen 20 ,21 ist bedarfsweise die figürlich nicht dargestellte zusätzliche Diode angeschlossen, welche zur Überbrückung des Schaltelements im Fehlerfall dient.

In Figur 4 ist ein weiteres Ausführungsbeispiel eines Stromrichters in so genannter H-Schaltung zur Verwendung in einer erfindungsgemäßen Vorrichtung dargestellt, bei der die Schaltelemente 10a...10i bzw. 10a'...10i', 11a...11i bzw. 11a'...11i', 12a...12i bzw. 12a'...12i' gemäß Figur 2 zu Phasenelementen 27, 28, 29 angeordnet sind. Jedes der Phasenelemente 27, 28, 29 umfasst zwei Parallelzweige mit jeweils in Reihe geschalteten Schaltelementen 10a...10i bzw. 10a'...10i', 11a...11i bzw. 11a'...11i', 12a...12i bzw. 12a'...12i'. Die Parallelzweige sind jeweils über zwei in Figur 4 oben und unten dargestellte äußere Verbindungsleitungen und eine mittige Verbindungsleitung miteinander verbunden, wobei zwischen der mittigen und jeder äußeren Verbindungsleitung die gleiche Anzahl von Schaltelementen in Reihe geschaltet ist. Die mittige Verbindungsleitung weist jeweils einen Phasenanschluss 30, 31, 32 zur Verbindung mit zwei Phasen einer angeschlossenen Wechselspannung auf. Die Phasenanschlüsse 30, 31, 32 sind schematisiert als sekundärseitige Anschlüsse von Transformatoren 30, 31, 32 dargestellt, an deren nicht dargestellter Primärseite die jeweilige Wechselspannung abgegriffen oder angelegt wird. Den jeweiligen Phasenelementen 27, 28, 29, die miteinander in Reihe verbunden sind, sind Kondensatoren 33, 34, 35 parallel geschaltet. Wird die gezeigte Anordnung zur Erzeugung einer Wechselspannung betrieben, wird durch jedes Phasenelement aus der gleichspannungsseitig eingekoppelten Gleichspannung eine Wechselspannung in eine Phase einer mehrphasigen Wechselspannung eingespeist, indem die einzelnen Schaltelemente geeignet angesteuert werden. Die Kondensatoren 33, 34, 35 dienen einer zusätzlichen Stabilisierung und Glättung und sind nur optional vorgesehen. Diese Anordnung wirkt nach dem Prinzip eines Voltage Sourced Converters und generiert aus der gleichspannungsseitig eingeprägten oder durch den Stromrichter selbst erzeugten Gleichspannung eine dreiphasige Wechselspannung. Somit kann die Anordnung selbstverständlich auch als Umrichter zum Umwandeln einer dreiphasigen Wechselspannung in eine Gleichspannung und umgekehrt verwendet werden.

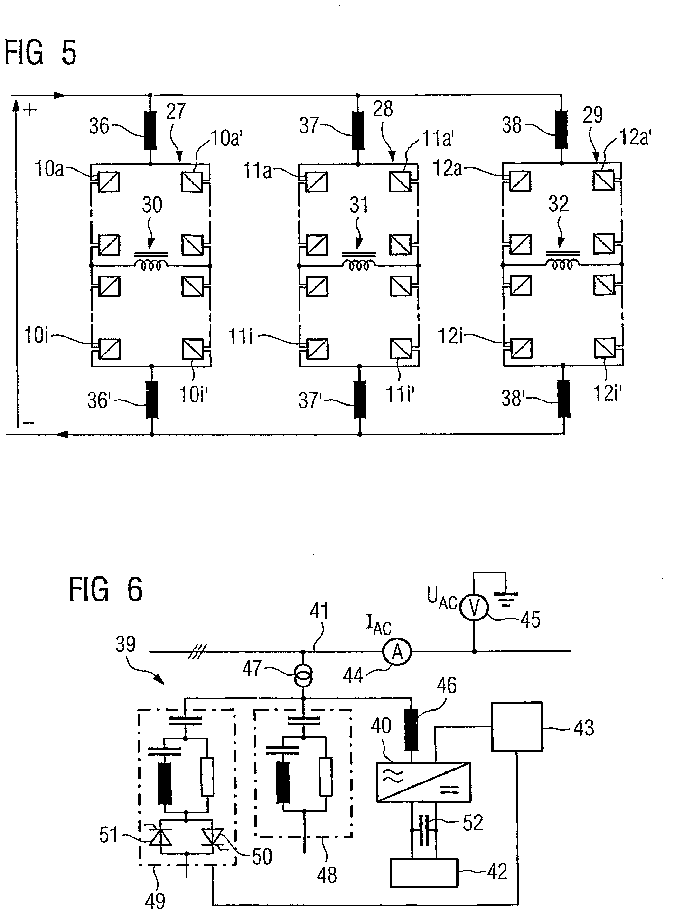

Die Figur 5 zeigt einen Stromrichter mit einer Parallelschaltung der Phasenelemente 27, 28, 29, mit der höhere Übertragungsströme realisiert werden im Vergleich zur Reihenschaltung der Fig. 4. Die Phasenelemente sind in dieser Ausführungsform beispielhaft mittels Spulen 36, 37, 38 bzw. 36', 37', 38' mit dem bipolaren Gleichstromkreis verbunden, an den eine Übertragungsleitung, ein Kabel oder eine GIL oder eine beliebige Kombination derselben angeschlossen werden kann.

In Figur 6 ist ein weiteres erfindungsgemäßes Ausführungsbeispiel einer Vorrichtung zur Elektroenergieübertragung 39 schematisch dargestellt. Die Vorrichtung umfasst einen Stromrichter 40, der an eine Übertragungsleitung 41 eines Übertragungsnetzes angeschlossen ist, wobei der Stromrichter 40 gleichspannungsseitig mit einem Kondensator 52 und einer optionalen Gleichspannungsquelle 42 verbunden ist. Die Übertragungsleitung 41 ist als Übertragungsnetz Teil eines Energieversorgungsnetzes mit Lastanschluss.

Zur Steuerung und Regelung des Stromrichters dient neben weiteren Mitteln zum Regeln der gezeigten erfindungsgemäßen Vorrichtung eine Steuerungs- und Regelungseinheit 43, an welche ein mittels einer Strommesseinheit 44 erfasster Messwechselstrom I_{AC} und eine mittels einer Spannungsmesseinheit 45 gewonnene Messwechselspannung U_{AC} übertragen und in dieser mit vorgegebenen Sollwerten verglichen werden, um mittels geeigneter Steuerungsverfahren die Wechselspannung der Übertragungsleitung 41 dynamisch und phasenangepasst zu steuern. Es sei an dieser Stelle nochmals darauf hingewiesen, dass der Begriff Wechselspannung beliebige Zeitverläufe der Spannung umfasst, mit der die Übertragungsleitung 41 als Übertragungsnetz beaufschlagt ist, und nicht auf sinusförmige oder harmonische Spannungsverläufe begrenzt ist.

Der Stromrichter 40 ist über eine optionale Spule 46 sowie einen ebenfalls optionalen Transformator 47 an die Übertragungsleitung 41 angeschlossen. Mit Hilfe des Stromrichters 40 sind eine Blind- und/oder Wirkleistungssteuerung oder dynamische Regelfunktionen wie Dämpfung von Leistungspendelungen und/oder subsynchronen Resonanzen und/oder sub- und/oder supersub-Harmonischen und/oder Spannungssymmetrierung mittels aktiver Einkopplung einer dynamisch in Betrag und/oder Phase veränderlichen Spannung ermöglicht.

Der Stromrichter 40 weist figürlich nicht dargestellte Phasenelemente wie die in Figur 1 gezeigten Umrichter 4, 6 oder wie die in den Figuren 4 oder 5 dargestellten Stromrichter auf. Weitere Baugruppen zur Kompensation 48, 49 mit festen Elementen sowie schalt- oder steuerbaren Leistungshalbleitern 50, 51 sind ebenfalls mit der Übertragungsleitung 41 verbunden. Die passiven Komponenten der Baugruppen zur Kompensation 48, 49 können aus beliebigen Kombinationen von Spulen, Kondensatoren, Widerständen und Ableitern und/oder Einzelelementen derselben bestehen. So ist beispielsweise eine Bestückung der Baugruppe 49 mit einem Widerstand vorteilhaft, so dass ein geschalteter oder gesteuerter Bremswiderstand zum Abbau eines Wirkleistungsüberschusses auf der Übertragungsleitung 41 realisiert ist. Ein solcher Wirkleistungsüberschuss kann beim Abschalten von an der Übertragungsleitung 41 angeschlossenen Lasten oder HGÜ-Anlagen zu schädlichen Überspannungen führen.

Vorteilhafterweise verfügt die Baugruppe 49 über wenigstens einen Ableiter. Durch diese Ableiterbestückung ist eine vergleichbare Spannungsreduktion erzielbar. Die Verbindung des Stromrichters 40 und der Baugruppen zur Kompensation 48, 49 mit der mehrphasigen Übertragungsleitung 41 kann über den Transformator 47 oder über eine Impedanz oder auch direkt erfolgen. Derartige Kompensations- und Steuerungselemente sind als solche unter der Bezeichnung FACTS bekannt. Bei der hier gezeigten erfindungsgemäßen Vorrichtung wird die im Stromrichter 40 generierte Wechselspannung aktiv an die Übertragungsleitung 41 aufgeschaltet. Der Stromrichter 40 wird dabei in Abhängigkeit von den Übertragungsanforderungen angesteuert, so dass das eingekoppelte Signal in feiner Abstufung an die Übertragungsanforderungen angepasst werden kann. Anstelle der Leistungshalbleiter 50, 51 können auch mechanische Schalter wie beispielsweise Leistungsschalter zum Einsatz kommen. Dabei sind durch die erfindungsgemäße Vorrichtung als solche bekannte FACTS, beispielsweise ein Static Synchronous Compensator (STATCOM), bei serieller Ankopplung an die Übertragungsleitung ein Static Synchronous Series Compensator (S3C) oder bei Kombination von Parallel- und Serien-Ankopplung ein Unified Power Flow Controller (UPFC), realisiert.

Die in den Figuren 1, 4, 5 und 6 dargestellten Vorrichtungen können im Rahmen der Erfindung abweichend von den dargestellten dreiphasigen Wechselspannungsnetzen beziehungsweise der dreiphasigen Übertragungsleitung 41 auch mit ein-, zwei,- oder mehrphasigen Wechselstromnetzen beziehungsweise Übertragungsleitungen mittels jeweils zweckmäßiger Anschlussmittel verbindbar sein.

Ferner eignet sich die Vorrichtung gemäß Figur 1, sowohl in der dort gezeigten Brückenschaltung als auch in der Variante mit Stromrichtern mit H-Schaltung gemäß der Figur 4, 5 in besonderer Weise zum bekannten HGÜ-Multiterminal Betrieb, also zur Hochspannungsgleichstromübertragung mit drei oder mehr Stromrichtern, wobei die Stromrichter mittels einer Übertragungsleitung, die als Kabel oder durch eine gasisolierte Übertragungsleitung realisiert ist, oder aber direkt unter Ausbildung einer so genannten Kurzkupplung miteinander verbunden sind.

Die Kondensatoren der in Figur 1 gezeigten Schaltungsanordnung 9, 9', die Kondensatoren 26 gemäß der Figuren 2 und 3, die Kondensatoren 33, 34, 35 gemäß Figur 4 und die Kondensatoren der Figuren 6 einschließlich des Kondensators 52 können mit Energiespeichern wie beispielsweise Schwungrad, Batterien, Super-Caps oder dergleichen beliebig kombiniert oder durch diese Energiespeicher ersetzt werden. Dazu werden die Energiespeicher parallel zu oder an Stelle der besagten Kondensatoren angeordnet. Auch ist eine räumlich konzentrierte Anordnung in einer gemeinsamen Baugruppe wie beispielsweise in der Schaltungsanordnung 9 als auch eine verteilte Anordnung der Energiespeicher, also eine räumliche Aufteilung auf verschiedene Bauteile, möglich.

### Bezugszeichenliste

- 1: HGÜ-Anlage
- 2, 3: Wechselspannungsnetz
- 4: erster Umrichter
- 5: Übertragungskabel
- 6: zweiter Umrichter
- 7, 7': Innenleiter
- 8, 8': Mantelleiter
- 9, 9': Schaltungsanordnung
- 10, 11, 12: Phasenelemente
- 10a...10i: Schaltelemente
- 11a...11i: Schaltelemente
- 12a...12i: Schaltelemente
- 10a'...10i': Schaltelemente
- 11a'...11i': Schaltelemente
- 12a'...12i': Schaltelemente
- 13, 14, 15: Phasenelemente
- 13a...13i: Schaltelemente
- 14a...14i: Schaltelemente
- 15a...15i: Schaltelemente
- 16, 16': Spannungswandler
- 17, 17': Stromwandler
- 18, 19: Regelungseinheit
- 20, 21: Anschlüsse
- 22, 23: Leistungshalbleiter
- 24, 25: Dioden
- 26: Kondensator
- 27, 28, 29: Phasenelemente
- 30, 31, 32: Phasenanschlüsse
- 33, 34, 35: Kondensatoren
- 36, 37, 38: Spulen
- 36', 37', 38': Spulen
- 39: System zur Elektroenergieübertragung
- 40: Stromrichter
- 41: Übertragungsleitung
- 42: Energiespeichermittel
- 43: Steuerungs- und Regelungseinheit
- 44: Strommesseinheit
- 45: Spannungsmesseinheit
- 46: Spule
- 47: Transformator
- 48, 49: Baugruppen zur Kompensation
- 50, 51: Thyristoren
- 52: Kondensator

## Patentansprüche

1. Vorrichtung für Elektroenergieübertragung (1, 39) mit mindestens einem Stromrichter (4, 6, 40), wobei jeder Stromrichter (4,6,40) Phasenelemente (10, 11, 12, 13, 14, 15, 27, 28, 29) aufweist, welche jeweils über eine Anordnung von Schaltelementen (10a...10i, 11a...11i, 12a...12i, 13a...13i, 14a...14i, 15a...15i, 10a' ... 10i', 11a'...11i', 12a'...12i') verfügen, zwei abschaltbare Leistungshalbleiter (22,23) und mindestens zwei jeweils dazu parallel geschaltete Freilaufdioden (24,25) und Energiespeichermittel (26) um-fass, wobei die Phasenelemente (27,28,29) jeweils zwei Parallelzweige mit jeweils einer geraden Anzahl von Schaltelementen in Reihenschaltung aufweisen, und die zwei Parallelzweige mittels einer Transformatorwicklung miteinander verbunden sind, und wobei die Vorrichtung Mittel (16, 17, 18, 19, 43, 44, 45) zum Regeln des Stromrichters aufweist, so dass der Nullphasenwinkel, die Amplitude oder die Augenblickswerte einer Wechselspannung eines mit der Vorrichtung verbindbaren Übertragungsnetzes oder die Gleichspannung und der Gleichstrom einer Gleichspannungsleitung, welche wenigstens einen der Stromrichter mit einer Gleichspannungsquelle verbindet, steuerbar sind.

2. Vorrichtung nach Anspruch 1,
**dadurch gekennzeichnet, dass**
die Schaltelemente (10a...10i, 11a...11i, 12a...12i, 13a...13i, 14a...14i, 15a...15i) eines Phasenelementes (10, 11, 12, 13, 14, 15) in Reihe geschaltet sind, wobei die Schaltelemente (10a...10i, 11a...11i, 12a...12i, 13a...13i, 14a...14i, 15a...15i) in geradzahliger Anzahl vorgesehen sind, und
**dadurch gekennzeichnet,**
**dass** die Schaltelemente jeweils mindestens zwei hintereinander geschaltete abschaltbare Leistungshalbleiter (22,23) und mindestens zwei jeweils dazu parallel geschaltete Freilaufdioden (24,25) und ein jeder Hintereinanderschaltung der mindestens zwei abschaltbaren Leistungshalbleiter parallel geschaltetes Energiespeichermittel (26) umfassen, und dass die gerade Anzahl von Schaltelementen in Reihenschaltung wenigstens 4 beträgt.
ein Last- oder Netzanschluss an der Reihenschaltung der Schaltelemente mittig angeordnet ist.

3. Vorrichtung nach Anspruch 1 oder 2,
**dadurch gekennzeichnet, dass** wenigstens zwei Parallelzweige galvanisch über eine Parallelzweigverbindung miteinander verbunden sind.

4. Vorrichtung nach einem der Ansprüche 1 bis 3,
**dadurch gekennzeichnet, dass** mehrere Phasenelemente (27, 28, 29) eines Stromrichters parallel miteinander verbunden sind.

5. Vorrichtung nach einem der Ansprüche 1 bis 3,
**dadurch gekennzeichnet, dass** mehrere Phasenelemente (27, 28, 29) in Reihe miteinander verbunden sind.

6. Vorrichtung nach einem der vorhergehenden Ansprüche,
**dadurch gekennzeichnet, dass** parallel zu den Phasenelementen (27, 28, 29) Energiespeichermittel (33,34,35) angeordnet sind.

7. Vorrichtung nach einem der vorhergehenden Ansprüche,
**dadurch gekennzeichnet, dass** jedes Phasenelement (10, 11, 12, 13, 14, 15, 27, 28, 29) wenigstens eine Impedanz (36,37,38,36',37',38') aufweist oder über eine Impedanz (36,37,38,36',37',38') mit einem anderen Phasenelement verbunden ist.

8. Vorrichtung nach einem der vorhergehenden Ansprüche,
**dadurch gekennzeichnet, dass** mindestens ein Stromrichter (4, 6, 40) parallel zum Übertragungsnetz (41) oder zur Gleichspannungsleitung (5) anschließbar ist.

9. Vorrichtung nach einem der vorhergehenden Ansprüche 1 bis 7,
**dadurch gekennzeichnet, dass** mindestens ein Stromrichter (4, 6, 40) in Reihe zum Übertragungsnetz (41) oder zur Gleichspannungsleitung (5) anschließbar ist.

10. Vorrichtung nach einem der vorhergehenden Ansprüche,
**dadurch gekennzeichnet, dass** die Gleichspannungsquelle ein zweiter Stromrichter ist.

11. Vorrichtung nach einem der vorhergehenden Ansprüche,
**dadurch gekennzeichnet, dass** die Gleichspannungsleitung (5) zumindest zum Teil eine gasisolierte Übertragungsleitung, ein Kabel und/oder eine Freileitung ist.

12. Vorrichtung nach einem der vorhergehenden Ansprüche,
**dadurch gekennzeichnet, dass** einer der Stromrichter (4, 6, 40) netzgeführte Leistungshalbleiter aufweist.

13. Vorrichtung nach einem der vorhergehenden Ansprüche,
**dadurch gekennzeichnet, dass** die Gleichspannungsleitung (5) ein- oder zweipolig ist.

14. Vorrichtung nach einem der Ansprüche 1 bis 8,
**dadurch gekennzeichnet, dass** die Gleichspannungsleitung (5) eine Impedanz ist.

15. Vorrichtung nach einem der vorhergehenden Ansprüche,
**dadurch gekennzeichnet, dass** den Schaltelementen mindestens eine weitere Diode parallel geschaltet ist.

16. Vorrichtung nach einem der vorhergehenden Ansprüche,
**dadurch gekennzeichnet, dass**
das Übertragungsnetz eine oder mehrere Phasen aufweist.

17. Vorrichtung nach einem der vorhergehenden Ansprüche,
**dadurch gekennzeichnet, dass**
die Energiespeichermittel zumindest teilweise Kondensatoren (9, 9', 26, 33, 34, 35, 52) sind.

18. Vorrichtung nach einem der vorhergehenden Ansprüche,
**dadurch gekennzeichnet, dass** jeder Stromrichter (4, 6, 40) mittels eines Energiespeichers mit der Gleichspannungsleitung (5) verbunden ist.

19. System mit einer Vorrichtung nach einem der Ansprüche 1 bis 18 und einem wenigstens eine Phase aufweisenden Übertragungsnetz, das einen Wechselstrom führt.

## Claims

1. Apparatus for electrical power transmission (1, 39) having at least one converter (4, 6, 40), with each converter (4, 6, 40) having phase elements (10, 11, 12, 13, 14, 15, 27, 28, 29) which each have an arrangement of switching elements (10a...10i, 11a...11i, 12a...12i, 13a...13i, 14a...14i, 15a...15i, 10a'...10i', 11a'...11i', 12a'...12i'), wherein the phase elements (27, 28, 29) each have two parallel branches each having an even number of switching elements connected in series, and the two parallel branches are connected to one another by means of a transformer winding, and wherein the apparatus has means (16, 17, 18, 19, 43, 44, 45) for controlling the converter such that the zero phase angle, the amplitude or the instantaneous values of an AC voltage of a transmission system which can be connected to the apparatus, or the DC voltage and the direct current on a DC voltage line which connects at least one of the converters to a DC voltage source, can be controlled, **characterized in that** the switching elements each comprise at least two power semiconductors (22, 23) which are connected in series with one another and can be switched off and at least two freewheeling diodes (24, 25), which are respectively connected in parallel with them, and an energy storage means (26) connected in parallel with each series connection of the at least two power semiconductors which can be switched off, and **in that** the even number of switching elements connected in series is at least 4.

2. Apparatus according to Claim 1,
**characterized in that**
the switching elements (10a...10i, 11a...11i, 12a...12i, 13a...13i, 14a...14i, 15a...15i) of one phase element (10, 11, 12, 13, 14, 15) are connected in series, with an even number of switching elements (10a ... 10i, 11a...11i, 12a...12i, 13a...13i, 14a...14i, 15a...15i) being provided, and a load connection or power supply system, is arranged centrally on the series circuit formed by the switching elements.

3. Apparatus according to Claim 1 or 2,
**characterized in that**
at least two parallel branches are galvanically connected to one another via a parallel branch connection.

4. Apparatus according to one of Claims 1 to 3,
**characterized in that**
a plurality of phase elements (27, 28, 29) of a converter are connected in parallel with one another.

5. Apparatus according to one of Claims 1 to 3,
**characterized in that**
a plurality of phase elements (27, 28, 29) are connected in series with one another.

6. Apparatus according to one of the preceding claims,
**characterized in that**
energy storage means (33, 34, 35) are arranged in parallel with the phase elements (27, 28, 29).

7. Apparatus according to one of the preceding claims,
**characterized in that**
each phase element (10, 11, 12, 13, 14, 15, 27, 28, 29) has at least one impedance (36, 37, 38, 36', 37', 38'), or is connected to another phase element via an impedance (36, 37, 38, 36', 37', 38').

8. Apparatus according to one of the preceding claims,
**characterized in that**
at least one converter (4, 6, 40) can be connected in parallel with the transmission system (41) or with the DC voltage line (5) .

9. Apparatus according to one of the preceding Claims 1 to 7,
**characterized in that**
at least one converter (4, 6, 40) can be connected in series with the transmission system (41) or the DC voltage line (5).

10. Apparatus according to one of the preceding claims,
**characterized in that**
the DC voltage source is a second converter.

11. Apparatus according to one of the preceding claims,
**characterized in that**,
at least in places, the DC voltage line (5) is a gas-insulated transmission line, a cable and/or an overhead line.

12. Apparatus according to one of the preceding claims,
**characterized in that**
one of the converters (4, 6, 40) has line-commutated power semiconductors.

13. Apparatus according to one of the preceding claims,
**characterized in that**
the DC voltage line (5) has one or two poles.

14. Apparatus according to one of Claims 1 to 8,
**characterized in that**
the DC voltage line (5) is an impedance.

15. Apparatus according to one of the preceding claims,
**characterized in that**
at least one further diode is connected in parallel with the switching elements.

16. Apparatus according to one of the preceding claims,
**characterized in that**
the transmission system has one or more phases.

17. Apparatus according to one of the preceding claims,
**characterized in that**
the energy storage means are formed at least partially by capacitors (9, 9', 26, 33, 34, 35, 52).

18. Apparatus according to one of the preceding claims,
**characterized in that**
each converter (4, 6, 40) is connected to the DC voltage line (5) by means of an energy store.

19. System having an apparatus according to one of Claims 1 to 18 and having a transmission system which has at least one phase and carries an alternating current.

## Revendications

1. Dispositif de transport (1, 39) d'énergie électrique, comprenant au moins un convertisseur (4, 6, 40), chaque convertisseur (4, 6, 40) ayant des éléments (10, 11, 12, 13, 14, 15, 27, 28, 29) de phase, qui disposent chacun d'un agencement d'éléments (10a...10i, 11a...11i, 12a...12i, 13a...13i, 14a...14i, 15a...15i, 10a'...10i', 11a'...11i', 12a'...12i') de circuit, les éléments (27, 28, 29) de phase ayant chacun deux branches en parallèle, ayant respectivement un nombre pair d'éléments de circuit en série, et les deux branches en parallèle sont reliées entre elles au moyen d'un enroulement de transformateur et dans lequel le dispositif a des moyens (16, 17, 18, 19, 43, 44, 45) de régulation du convertisseur, de manière à pouvoir commander l'angle de phase nulle, l'amplitude ou les valeurs instantanées d'une tension alternative d'un réseau de transport pouvant être reliées au dispositif ou la tension continue et le courant continu d'une ligne de tension continue, qui relie au moins l'un des convertisseurs à une source de tension continue,
**caractérisé en ce que**
les éléments de circuit comprennent chacun au moins deux semi-conducteurs (22, 23) de puissance déconnectables, montés les uns derrière les autres, et au moins deux diodes (24, 25) de roue libre, qui sont montées en parallèle, et un moyen (26) d'énergie monté en parallèle de chaque montage l'un derrière l'autre des au moins deux semi-conducteurs de puissance déconnectables, et **en ce que** le nombre pair d'éléments de circuit en série est d'au moins 4.

2. Dispositif suivant la revendication 1,
**caractérisé en ce que**
les éléments (10a...10i, 11a...11i, 12a...12i, 13a...13i, 14a...14i, 15a...15i) de circuit d'un élément (10, 11, 12, 13, 14, 15) de phase sont montés en série, les éléments (10a...10i, 11a...11i, 12a...12i, 13a...13i, 14a...14i, 15a...15i) de circuit sont prévus en un nombre pair et une borne de charge ou de réseau est disposée au milieu sur le montage série des éléments de circuit.

3. Dispositif suivant la revendication 1 ou 2,
**caractérisé en ce qu'**
au moins deux branches en parallèle sont reliées entre elles galvaniquement par une liaison de branche en parallèle.

4. Dispositif suivant l'une des revendications 1 à 3,
**caractérisé en ce que**
plusieurs éléments (27, 28, 29) de phase d'un convertisseur sont reliés entre eux en parallèle.

5. Dispositif suivant l'une des revendications 1 à 3,
**caractérisé en ce que**
plusieurs éléments (27, 28, 29) de phase sont reliés entre eux en série.

6. Dispositif suivant l'une des revendications précédentes,
**caractérisé en ce que**
des moyens (33, 34, 35) d'accumulation d'énergie sont montés en parallèle aux éléments (27, 28, 29) de phase.

7. Dispositif suivant l'une des revendications précédentes,
**caractérisé en ce que**
chaque élément (10, 11, 12, 13, 14, 15, 27, 28, 29) de phase a au moins une impédance (36, 37, 38, 36', 37', 38') ou est relié à un autre élément de phase par une impédance (36, 37, 38, 36', 37', 38').

8. Dispositif suivant l'une des revendications précédentes,
**caractérisé en ce qu'**
au moins un convertisseur (4, 6, 40) peut être raccordé en parallèle au réseau (41) de transport ou à la ligne (5) de tension continue.

9. Dispositif suivant l'une des revendications précédentes 1 à 7,
**caractérisé en ce qu'**
au moins un convertisseur peut être raccordé en série au réseau (41) de transport ou à la ligne (5) de tension continue.

10. Dispositif suivant l'une des revendications précédentes,
**caractérisé en ce que**
la source de tension continue est un deuxième convertisseur.

11. Dispositif suivant l'une des revendications précédentes,
**caractérisé en ce que**
la ligne (5) de tension continue est, au moins en partie, une ligne de transport isolée par du gaz, un câble et/ou une ligne aérienne.

12. Dispositif suivant l'une des revendications précédentes,
**caractérisé en ce que**
l'un des convertisseurs (4, 6, 40) a des semi-conducteurs de puissance commutés par le réseau.

13. Dispositif suivant l'une des revendications précédentes,
**caractérisé en ce que**
la ligne (5) de tension continue est monopolaire ou bipolaire.

14. Dispositif suivant l'une des revendications 1 à 8,
**caractérisé en ce que**
la ligne (5) de tension continue est une impédance.

15. Dispositif suivant l'une des revendications précédentes,
**caractérisé en ce qu'**
au moins une autre diode est montée en parallèle aux éléments de circuit.

16. Dispositif suivant l'une des revendications précédentes,
**caractérisé en ce que**
le réseau de transport a une phase ou plusieurs phases.

17. Dispositif suivant l'une des revendications précédentes,
**caractérisé en ce que**
les moyens d'accumulation d'énergie sont, au moins en partie, des condensateurs (9, 9', 26, 33, 34, 35, 52).

18. Dispositif suivant l'une des revendications précédentes,
**caractérisé en ce que**
chaque convertisseur (4, 6, 40) est relié à la ligne (5) de tension continue au moyen d'un accumulateur d'énergie.

19. Système comprenant un dispositif suivant l'une des revendications 1 à 18 et un réseau de transport, qui a au moins une phase et dans lequel passe un courant alternatif.
